# EUROPEAN PATENT APPLICATION

(11) **EP 4 525 283 A1**
(43) Date of publication of application: **19.03.2025**
(21) Application number: 23197751.3
(22) Date of filing: 15.09.2023
(51) Int. Cl.: H02M 1/00, H02M 1/36, H02M 7/517

(54) **MULTI-STAGE ELECTRICAL POWER SUPPLY FOR AN ELECTROLYSIS SYSTEM**

(71) Applicant: Siemens Energy Global GmbH & Co. KG, 81739 München (DE)
(72) Inventor: Craciun, Bogdan, 18069 Rostock (DE); Bendig, Marvin, 90513 Zirndorf (DE); Runser, Thibaut, 90478 Nürnberg (DE)

(57) **Abstract**

The invention relates to a multi-stage electrical power supply 120 for an electrolysis system 100, wherein an electrolyser 110 has an input voltage operating range, and the multi-stage electrical power supply 120 comprises a controller unit 124, at least a first and a second power conversion unit 127,128 connectable to an input 111 of the electrolyser 110, and DC-link capacitors 133, 134, wherein the first power conversion unit 127 has a first output voltage operating range that comprises a first subset of the input voltage operating range of the electrolyser 110 above and equal to a threshold output voltage of the first power conversion unit 127, the second power conversion unit 128 has a second output voltage operating range that comprises a second subset of said input voltage operating range below said threshold output voltage, the first and second output voltage operating ranges only together completely comprise the input voltage operating range of the electrolyser 110, the first power conversion unit 127 comprises a main AC-DC converter unit having a first converter output 132 connected to the DC-link capacitors 133, 134, and being configured to provide electrical power required by the electrolyser 110 for the first subset of the input voltage operating range via the first converter output 132 when an output voltage at the first converter output is above or equal to the threshold output voltage, and the second power conversion unit 128 has a second converter output 135 and provides electrical power for the second subset of the input voltage operating range when the voltage at the first converter output 132 is below the threshold output voltage, which is a minimum output voltage threshold of the first power conversion unit 127, and wherein the controller unit 124 selects the second power conversion unit 128 instead of the first to provide power to the electrolyser input 111 when the voltage at the first converter output is below the threshold.

## Description

The present disclosure in general relates to power supplies for electrical loads, in particular to electrical power supplies connected to an AC power grid, i.e., a (private or public) electric network, and using alternating current (AC) to direct current (DC) conversion for supplying DC power to an electrical load. More particularly, the present disclosure relates to a multi-stage electrical power supply for an electrolysis system and to an electrolysis system. Further, the present disclosure relates to a method of operating a multi-stage electrical power supply for an electrolysis system, a computer program product and a computer readable storage medium.

Electrolysis is a process of using electricity to split water into hydrogen and oxygen. This reaction takes place in a unit called an electrolyser, e. g. a polymer electrolyte membrane (PEM) electrolyser, and requires the supply of direct current (DC). An electrolysis system may comprise one or more electrolysers which constitute a high-power load and may have a high current demand of DC current, e.g., 7-10 kA.

The power supply is a vital component of an electrolysis system since the power supply needs to provide a required current and voltage quality to the electrolyser in order for the electrolysis system to operate in a controlled and safe manner. In particular, proper loading and unloading of the electrolyser, e. g., during ramp-up and ramp-down operation sequences, may be critical. Further, the power supply has to function reliably under any condition of the AC power grid. Hydrogen can be highly combustible and, therefore, hydrogen production also during loading and unloading, i.e., de-loading, sequences has to be kept within the suitable safety limits, and any power jumps and quality deviations of DC current and DC voltage provided to the electrolyser have to respect the operating range of the electrolyser.

This could be achieved with a single-stage power supply using an AC to DC (AC-DC) line commutated converter with a thyristor-based rectifier coupled to receive alternating currents from a transformer that is connected to an AC power grid, where the line commutated converter controls the voltage and the current needed by the electrolyser in the so called "Buck mode" that allows to regulate the current flowing into the electrolyser between 0% and 100% and therefore allows a controlled ramp-up and ramp-down of the electrolysis system. However, such a configuration may require additional external filtering and reactive power compensation to uphold conformity with the grid code of the connected AC power grid, particularly if the grid is weak, and may therefore lead to extra costs and effort.

The need for additional filtering and reactive power compensation could be reduced or avoided with self-commutated power supply topologies that use Insulated Gate Bipolar Transistor (IGBT) based AC-DC converters which are voltage source converters and regulate the DC voltage in a so called "boost mode". However, in a boost mode configuration, the output current of a power supply can only be regulated within a certain range and above a minimum current threshold, i.e., an electrolyser input current ramp-up and ramp-down from 0 A is not possible.

In order to enable such a complete ramp-up and ramp-down but also avoid additional filtering and reactive power compensation, a double stage conversion system could be used where the power is processed by a rectifier (IGBT, thyristor or diode) but additionally further on by an additional direct current-to-direct current (DC-DC) converter in Buck mode. In this configuration the power can be provided to the electrolyser in a controlled manner: Using IGBTs in the first stage AC-DC converter allows to make use of the advantages of a voltage source converter, whereas the second stage DC-DC converter allows to regulate the current provided to the electrolyser over the full operating range. However, this approach requires two converters that are designed for the full power rating of the connected electrolyser, making it expensive. In addition, such a solution may show a low efficiency due to losses in both of the first and second stage converters.

It is an objective of the present invention to provide an alternative possibility for supplying DC power to a high-power load such as an electrolyser, from an AC power grid that also allows for a complete ramp-up and ramp-down of input current and at the same time avoids or reduces a need for additional filtering and reactive power compensation, but is cheaper and can be operated more efficiently.

This objective is solved by a multi-stage electrical power supply for an electrolysis system as stated in claim 1 and an electrolysis system as stated in claim 9. A corresponding method of operating such a multi-stage electrical power supply for an electrolysis system, a computer program product and a computer readable storage medium are disclosed in claims 10, 13 and 14, respectively. Advantageous additional embodiments of the invention are disclosed in the respective dependent claims.

According to a first aspect of the invention, a multi-stage electrical power supply for an electrolysis system is provided, wherein an electrolyser of the electrolysis system has an input voltage operating range and the multi-stage electrical power supply comprises a controller unit, at least a first and a second power conversion unit connectable to an input of the electrolyser, and one or more direct current (DC) link capacitors. The first power conversion unit has a first output voltage operating range that comprises a first subset of the input voltage operating range of the electrolyser above and equal to a threshold output voltage of the first power conversion unit and the second power conversion unit has a second output voltage operating range that comprises a second subset of the input voltage operating range of the electrolyser below said threshold output voltage of the first power conversion unit, wherein the first and second output voltage operating ranges only together completely comprise the input voltage operating range of the electrolyser. The first power conversion unit is a main alternating current-to-direct current (AC-DC) converter unit having a first converter output connected to the one or more direct current link capacitors, and being configured to provide electrical power required by the electrolyser for the first subset of the input voltage operating range via the first converter output when (i.e. during the time when) an output voltage at the first converter output is above or equal to the threshold output voltage, and the second power conversion unit has a second converter output and is configured to provide electrical power required by the electrolyser for the second subset of the input voltage operating range via the second converter output when (i.e. during the time when) the output voltage at the first converter output is below said threshold output voltage. The threshold output voltage is a minimum output voltage threshold of the first power conversion unit, and the controller unit is configured to select the second power conversion unit instead of the first power conversion unit to provide electrical power to the input of the electrolyser when the output voltage at the first converter output is below the threshold output voltage.

The controller unit may be or be part of a controller, particularly a programmable controller, i.e., a programmable device comprising at least a processor and a memory unit, connected, e. g., to receive sensed voltage levels and to select modes of operation of the power supply, e. g., by setting switches for enabling and disabling connections of power conversion units.

A power conversion unit is or comprises a DC-DC converter unit or an AC-DC converter unit, and may additionally comprise additional circuitry, such as an input filter, e. g. a high-frequency filter.

Depending on the embodiment of the multi-stage electrical power supply, the main alternating current-to-direct current (AC-DC) converter unit may be the only AC-DC converter unit of the multi-stage electrical power supply or may be a first of a plurality of AC-DC converters.

A direct current link capacitor, i.e., a DC-link capacitor, connected to an output of a power conversion unit has a capacitance big enough to store enough charge to allow for an uninterrupted supply of power during a certain period of time at a required level even if the power conversion unit itself is unable to provide the required power during that period of time.

The first output voltage operating range of the first power conversion unit comprising a first subset of the input voltage operating range of the electrolyser above and equal to a threshold output voltage of the first power conversion unit refers to the first output voltage operating range being a range starting with the threshold output voltage of the first power conversion unit and partially covering the input voltage range of the electrolyser, but not including voltage levels below that threshold output voltage.

The feature that the first and second output voltage operating ranges only together completely comprise the input voltage operating range of the electrolyser excludes any topology wherein a power conversion unit is used that not only partially but fully covers the complete input voltage operating range of the electrolyser.

The minimum output voltage threshold of the first power conversion unit that defines the threshold output voltage depends on the type of AC-DC converter chosen for the first power conversion unit. For example, if the AC-DC converter is based on IGBTs for implementing the used rectifier circuitry, the first power conversion unit will start to provide the required DC output current when the output voltage at the first converter output reaches the minimum output voltage of that particular circuitry. The minimum output voltage may be chosen as the minimum output voltage threshold. In another embodiment, the minimum output voltage threshold may be defined relative to that minimum output voltage, e.g., 10% above that minimum output voltage. This threshold is used by the controller unit to decide which of the first or the second power conversion units to select for providing electrical power to the input of the electrolyser. In other words, below the threshold, the second power conversion unit is used to supply power, but once the threshold output voltage is reached the first power conversion unit is selected to provide the required DC power to the electrolyser.

None of the first and second power conversion units must be configured to provide the required DC power for the complete input operating range of the electrolyser and the first power conversion unit only needs to provide power for the partial operating range starting from the threshold output voltage, while for the partial operating range below the threshold, i.e., for example during a current ramp-up or ramp-down phase of the electrolysis system, only the second power conversion unit will provide the required power to the electrolyser, i.e., the second power conversion unit must only be dimensioned for lower power as it is only active during ramp-up and ramp-down phases. The multi-stage electrical power supply can be operated efficiently and each of the power conversion units need to meet less strict requirements compared to power conversion units designed for covering a complete ramp-up and ramp-down over the complete input voltage operation range of the connected electrolyser, allowing for increased efficiency, reliability and availability at a lower prize through use of standard component available for standard voltage levels.

For example, in the low voltage spectrum (0-1000V) there are standard voltage levels, such as 400V or 690 V, where the required equipment is easily available. Components with these ratings are optimized, reliable and cost effective due to already existing supply chains. Equipment in other business fields - such as energy generation using wind turbines - also regularly use 690V components. Hence, power supply components such as protection circuits, transformers, converters are available at low cost and supply chains of such components are available in the market.

In a preferred embodiment, the size of the second subset of the input voltage operating range of the electrolyser, i.e., the range below the threshold output voltage at the first converter output, is less than 20%, e.g. 100, of the input voltage operating range of the electrolyser, leading to cost and size improvements and a reduction of cooling requirements for the second power conversion unit that is only used during ramping periods of the electrolyser.

In an embodiment of the multi-stage electrical power supply, it further comprises a switchable pre-charge circuit element configured to pre-charge the one or more direct current link capacitors when the first converter output voltage is below the threshold output voltage. This allows to pre-charge the one or more DC-link capacitors before they can be charged by the first power conversion unit.

In an example embodiment, the switchable pre-charge circuit element comprises an additional alternating current-to-direct current (AC-DC) converter unit. This allows to pre-charge the one or more DC-link capacitors from the AC power grid, if the additional AC-DC converter unit is configured to work in an operating range below the output voltage threshold of the first power conversion unit with the main AC-DC converter. However, in an alternative embodiment, the switchable pre-charge circuit element may comprise or be connected to a DC power source such as a battery.

In a preferred embodiment of the multi-stage electrical power supply the second power conversion unit is a direct current-to-direct current (DC-DC) converter unit having a second converter input connected to the first converter output of the first power conversion unit, and the multi-stage electrical power supply further comprises a switchable bypass circuit with a bypass switch, for example, a contactor switch, connected to bypass the second power conversion unit when the bypass switch is in an ON state. The DC-DC converter unit may be an isolated or a non-isolated DC-DC converter.

In the ON state, the bypass circuit is enabled and connects the second converter input to the second converter output. In an OFF state, the bypass circuit is disabled and the second power conversion unit converts current received from the first converter output. Since the controller unit is configured to select the second power conversion unit instead of the first power conversion unit to provide electrical power to the input of the electrolyser when the output voltage at the first converter output is below the threshold output voltage, the controller unit switches the bypass switch to the OFF state while the output voltage at the first converter output is below the threshold output voltage. Since the one or more DC-link capacitors are also connected to the first converter output, the second power conversion unit will receive DC current at least from pre-loaded DC-link capacitors. As soon as the first power conversion unit is ready to provide DC current, i.e., as soon as the output voltage at the first converter output raises to the minimum output voltage threshold, the controller unit can change the bypass switch to the OFF state, and the DC current then provided by the first power conversion unit is directed to the input of the electrolyser, bypassing the second power conversion unit, i.e., the DC-DC converter.

With this modified double-stage converter topology that uses only a partial scale DC-DC converter as the second power conversion unit, which can be bypassed after a certain loading of the electrolyser, the multi-stage electrical power supply is operated as a single-stage power supply with selectable stages. An advantage of the proposed topology is a boost in efficiency and reduced cost of the entire power supply. Since the operation of the DC-DC converter is limited, the reliability of the entire converter system is improved.

The described operation depends on the state of the bypass switch which is set to the OFF state at the start of operation of the power supply. Hence, power flows through both converters and a controlled ramp-up of the electrolyser is possible. As soon as the minimum output voltage threshold of the first stage converter, i.e., the first power conversion unit, is reached, the bypass switch is turned on, i.e., is switched to the ON state, and the second power conversion unit with the DC-DC converter is bypassed, which means power is directed through the first power conversion unit only. Using this topology, the DC-DC converter of the second power conversion unit is only required to be dimensioned for lower power as it is only active during ramp-up and ramp-down periods of the electrolysis system.

In an additional embodiment of the multi-stage electrical power supply, the controller unit is further configured to switch the bypass switch to an OFF state and also disable the second power conversion unit when the electrolyser is not present or consumes no electrical power. In this situation the electrolyser is not present or not active and hydrogen is not produced. With the bypass switch in OFF state and the second power conversion unit disabled, the first power conversion unit with the main AC-DC converter unit together with the DC-link capacitors constitute a static synchronous compensator (STATCOM) device for the AC power grid the multi-stage electrical power supply of the electrolysis system is connected to. STATCOM functionality is to provide flexible reactive power to the power system, i.e., the AC power grid and its connected entities (such as power plants and consumers). This may be seen as an additional business case for the owner of the electrolysis system.

Further, the STATCOM device, i.e., the multi-stage electrical power supply in STATCOM mode, provides active filtering capabilities. The STATCOM device can individually and selectively filter harmonics present in the power system created by nearby consumers, for example, thyristor-based power supplies of neighbouring electrolysis systems (since thyristor-based rectifiers with activation by firing angle signals tend to generate harmonics on the input AC currents). Reactive power supply and active filtering are suitable for combining in a hybrid system the described multi-stage power supply, which may in an embodiment comprise converters based on IGBTs, connected to an electrolyser, with neighbouring power supplies for additional electrolysis systems, where the power supplies comprise thyristor-based converters.

In an alternative embodiment of the multi-stage electrical power supply the second power conversion unit is not a DC-DC converter unit. Instead, the additional alternating current-to-direct (AC-DC) current converter unit (of the switchable pre-charge circuit element configured to pre-charge the one or more direct current link capacitors when the first converter output voltage is below the threshold output voltage) is the second power conversion unit. In other words, alternatively to using a DC-DC converter for the second power conversion unit, the pre-charge circuit of the one or more DC-link capacitors is suitably configured or dimensioned, to be able to ramp-up or ramp-down the electrolyser during the time when the output voltage at the first power converter output is below the threshold output voltage. Particularly, the output voltage operating range of the switchable pre-charge circuit element is configured such that it comprises the second subset of the input voltage operating range of the electrolyser below the threshold output voltage, i.e., the minimum output voltage threshold, of the first power conversion unit.

In an example embodiment of this multi-stage electrical power supply, the first converter output and the second converter output are connected to the input of the electrolyser via an output switch. This allows to connect and disconnect the power supply from the electrolyser.

In an example embodiment the controller unit is further configured to switch the output switch to an OFF state when the electrolyser is not present or consumes no electrical power. Disconnected from the electrolyser, the remaining power supply can be used as a STATCOM device for the AC power grid.

According to a second aspect of the invention, an electrolysis system comprises at least one electrolyser and a multi-stage electrical power supply according to the first aspect of the invention and therefore implements the advantages and characteristics of the claimed multi-stage electrical power supply.

And according to a third aspect of the invention, a method of operating a multi-stage electrical power supply for an electrolysis system according to the first aspect of the invention is provided. It comprises connecting an input of the multi-stage electrical power supply to an AC power grid, determining a minimum output voltage threshold of a first power conversion unit of the multi-stage electrical power supply as a threshold output voltage, sensing an output voltage at a first converter output of the first power conversion unit, determining if the output voltage at the first converter output is below the threshold output voltage, and selecting the first power conversion unit to provide electrical power to an input of an electrolyser when the output voltage at the first converter output is not below the threshold output voltage, and selecting a second power conversion unit of the multi-stage electrical power supply instead of the first power conversion unit to provide electrical power to the input of the electrolyser when the output voltage at the first converter output is below the threshold output voltage.

In an embodiment the method further comprises pre-charging one or more direct current link capacitors connected to the first converter output using a switchable pre-charge circuit element of the multi-stage electrical power supply when the first converter output voltage is below the threshold output voltage.

And in a preferred embodiment of the method, the step of determining if the output voltage at the first converter output is below the threshold output voltage comprises determining that the second power conversion unit is a direct current-to-direct current (DC-DC) converter unit having a second converter input connected to the first converter output of the first power conversion unit and that the multi-stage electrical power supply further comprises a switchable bypass circuit with a bypass switch, connected to bypass the second power conversion unit when the bypass switch is in an ON state, the step of selecting the first power conversion unit to provide electrical power to an input of an electrolyser when the output voltage at the first converter output is not below the threshold output voltage comprises switching the bypass switch to the ON state, and the step of selecting a second power conversion unit of the multi-stage electrical power supply instead of the first power conversion unit to provide electrical power to the input of the electrolyser when the output voltage at the first converter output is below the threshold output voltage comprises switching the bypass switch to an OFF state.

Further, according to a fourth aspect of the invention, a computer program product comprises code portions that, when executed on a programmable apparatus, enable the multi-stage electrical power supply to carry out steps of a method according to the third aspect of the invention. In other words, the computer program product comprises code portions that, when executed on the programmable apparatus, enable the multi-stage electrical power supply to carry out a method according to an embodiment of the invention.

The programmable apparatus may be a programmable apparatus of the multi-stage electrical power supply, in particular a controller unit of the multi-stage electrical power supply, adapted to send to, process and receive signals from different units of the multi-stage electrical power supply, for example, an output voltage signal at the first converter output and a switching signal for changing the state of the bypass switch. In another embodiment, the programmable apparatus may be connected or connectable to the multi-stage electrical power supply. And according to a fifth aspect of the invention, a computer readable storage medium comprises a computer program product according the fourth aspect of the invention.

The computer program product corresponds to a computer program, at least including software code portions for performing steps of the method according to the invention when run on a programmable apparatus, such as the controller unit or other computer, for enabling the multi-stage electrical power supply to perform functions according to the invention.

The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates a first example of an electrolysis system comprising a multi-stage elec-trical power supply according to an embodiment of the invention;
- Fig. 2: schematically illustrates a second example of an electrolysis system comprising a multi-stage elec-trical power supply according to another embodiment of the invention;
- Fig. 3: schematically illustrates an example of a method of operating a multi-stage electrical power supply for an electrolysis system according to an embodiment of the invention; and
- Fig. 4: schematically illustrates a graph of an example of an input voltage over an input current at an elec-trolyser input connected to a multi-stage electri-cal power supply.

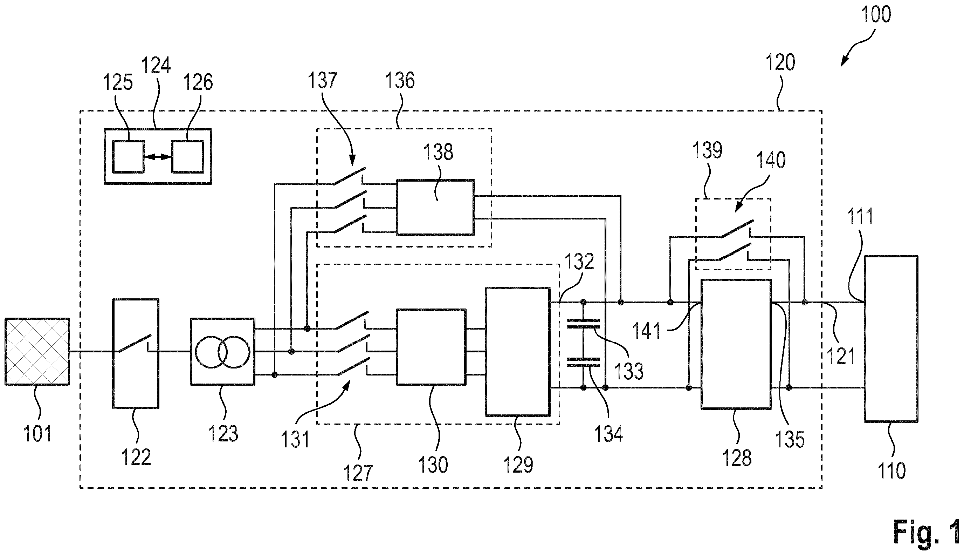

In Fig. 1, a first example of an electrolysis system 100 comprising a multi-stage electrical power supply 120 according to an embodiment of the invention is schematically shown. The electrolysis system also comprises an electrolyser 110 that has an input voltage operating range, with an electrolyser input 111 connected to a power supply output 121 of the multi-stage electrical power supply 120 that is connectable through a switchgear 122 to an AC power source, in particular to a (public) AC power grid 101. The AC voltage received from the AC power grid 101 is supplied via the switchgear 122 in an ON state to a transformer unit 123 that converts the grid voltage to a lower voltage, e. g. below 1000 V. In the shown embodiment, it is converted to three phase-shifted AC voltage signals. In the shown embodiment, the controller unit 124 is a programmable controller unit and comprises a processor 125 and a memory 126.

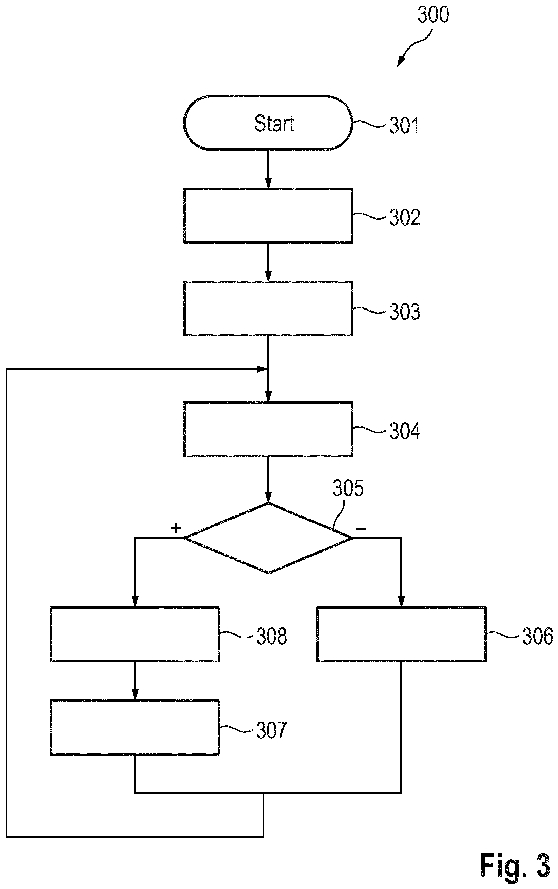

The multi-stage electrical power supply 120 has a controller unit 124 configured to send and receive all required signals to and from the different units, elements and switches of the multi-stage electrical power supply 120 (connections not shown). In the shown embodiment, the controller unit 124 is or comprises a programmable apparatus with at least a processor 125 and a memory 126, wherein the memory 126 comprises code portions of a computer program product, that, when executed by the processor of the programmable apparatus, enable the multi-stage electrical power supply 120 to carry out steps of an operation method as described in connection with Fig. 3.

The multi-stage electrical power supply 120 comprises a first power conversion unit 127 and a second power conversion unit 128 connectable to the input 111 of the electrolyser 110. In the shown embodiment, the first power conversion unit 127 comprises a main AC-DC converter unit 129, for example using an IGBT-based rectifier, with an input connected to a high-frequency filter unit 130 with an input connected to receive the transformed low voltage AC signal from the transformer unit 123 through a circuit breaker switch 131, e. g. an air circuit breaker (ACB), for damage protection, for example, from overcurrent.

The first power conversion unit 127 has a first output voltage operating range that comprises a first subset of the input voltage operating range of the electrolyser 110 above and equal to a threshold output voltage of the first power conversion unit 127 and the second power conversion unit 128 has a second output voltage operating range that comprises a second subset of the input voltage operating range of the electrolyser 110 below the threshold output voltage of the first power conversion unit 127. The first and second output voltage operating ranges only together completely comprise the input voltage operating range of the electrolyser 110.

The first power conversion unit 127 is or comprises the main AC-DC converter unit 127 and has a first converter output 132 connected to a set of two DC-link capacitors 133, 134.

The first power conversion unit 127 provides electrical power required by the electrolyser 110 for the first subset of the input voltage operating range via the first converter output 132 during the time when an output voltage at the first converter output 132 is above or equal to the threshold output voltage, and the second power conversion unit 128 provides electrical power required by the electrolyser 110 for the second subset of the input voltage operating range via a second converter output 135 during the time when the output voltage at the first converter output 132 is below the threshold output voltage. The threshold output voltage is a minimum output voltage threshold of the first power conversion unit 127. The controller unit 124 is configured to select the second power conversion unit 128 instead of the first power conversion unit 127 to provide electrical power to the input 111 of the electrolyser 110 when the output voltage at the first converter output 132 is below the threshold output voltage.

In the shown embodiment, the multi-stage electrical power supply 120 further comprises a switchable pre-charge circuit element 136 that is configured to pre-charge the direct current link capacitors 133, 134 when the first converter output voltage is below the threshold output voltage, in order to pre-charge the DC-link capacitors 133, 134 before they can be charged by the first power conversion unit 127. The shown switchable pre-charge circuit element 136 comprises pre-charge switch 137 at least for enabling and disabling the pre-charging. The switchable pre-charge circuit element 136 has an additional AC-DC converter unit 138 for pre-charging the DC-link capacitors 133, 134 from the AC power grid 101, if the additional AC-DC converter unit 138 is configured to work in an operating range below the output voltage threshold of the first power conversion unit 127 with the main AC-DC converter unit 129.

In the shown embodiment, the second power conversion unit 128 is or comprises a DC-DC converter unit having a second converter input 141 connected to the first converter output 132 of the first power conversion unit 127. Further, the multi-stage electrical power supply 120 comprises a switchable bypass circuit 139 with a bypass switch 140, for example a contactor switch. The switchable bypass circuit is connected to bypass the second power conversion unit 128 when the bypass switch 140 is in an ON state, i.e. closed or enabled.

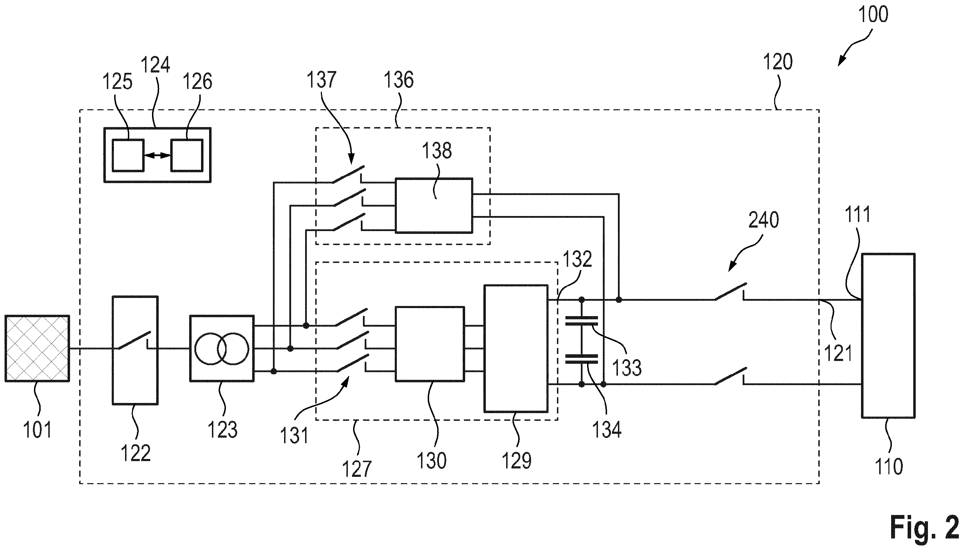

In Fig. 2, a second example of an electrolysis system 100 comprising a multi-stage electrical power supply 120 according to another embodiment of the invention is schematically shown. Elements identical or similar to the elements shown in Fig. 1 are shown with identical reference numbers. Only elements differing from Fig. 1 will be described in detail.

In the embodiment of the multi-stage electrical power supply 120 shown in Fig. 2 the second power conversion unit is not a DC-DC converter unit. Instead, the additional AC-DC converter unit 138 of the switchable pre-charge circuit element 136 that is used to pre-charge the DC-link capacitors 133, 134 when the first converter output voltage is below the threshold output voltage, is considered as the second power conversion unit. In other words, the additional AC-DC converter unit 138 of the switchable pre-charge circuit element 136 is suitably configured to be able to ramp-up or ramp-down the electrolyser 110 during the time when the output voltage at the first power converter output is below the threshold output voltage. For this, the output voltage operating range of the switchable pre-charge circuit element 136 is configured such that it comprises the second subset of the input voltage operating range of the electrolyser 110 below the minimum output voltage threshold, of the first power conversion unit 127.

The selection by the controller unit 124 of the second power conversion unit, i.e., in the shown embodiment the switchable pre-charge circuit element 136 with the additional AC-DC converter unit 138, instead of the first power conversion unit 127 to provide electrical power to the input 111 of the electrolyser 110 when the output voltage at the first converter output 132 is below the threshold output voltage, i.e., the minimum output voltage threshold, is carried out by the controller unit 124 by setting the pre-charge switch 137 to an ON state to connect the pre-charge circuit element 136 with the output of the transformer unit 123. The additional AC-DC converter unit 138 may comprise, for example, a thyristor-based rectifier.

The first converter output 132 which in this embodiment corresponds to the second converter output, is connectable to the input 111 of the electrolyser 110 via an output switch 240. This allows to connect and disconnect the power supply from the electrolyser 110.

In Fig. 3, an example of a method 300 of operating a multi-stage electrical power supply for an electrolysis system according to an embodiment of the invention is schematically shown. After start 301 of the method of operating a multi-stage electrical power supply for an electrolysis system, e.g., as shown in Fig. 1., an input of the multi-stage electrical power supply is connected 302 to an AC power grid, a minimum output voltage threshold of a first power conversion unit of the multi-stage electrical power supply is determined 303 as a threshold output voltage, and an output voltage is sensed 304 at a first converter output of the first power conversion unit.

In a next step, it is determined 305 if the output voltage at the first converter output is below the threshold output voltage. In case the determination, i.e., a comparison result, reveals that the output voltage at the first converter output is not below the threshold output voltage (in Fig. 3 indicated as "-"), the first power conversion unit is selected 306 to provide electrical power to an input of an electrolyser when, i.e. during the time when, the output voltage at the first converter output is not below the threshold output voltage. In case the determination, i.e., the comparison result, reveals that the output voltage at the first converter output is below the threshold output voltage (in Fig. 3 indicated as "+"), the second power conversion unit of the multi-stage electrical power supply instead of the first power conversion unit is selected 307 to provide electrical power to the input of the electrolyser when, i.e. during the time when, the output voltage at the first converter output is below the threshold output voltage.

The method then continues with the step of sensing 304 an output voltage at a first converter output of the first power conversion unit.

In the embodiment of the method shown in Fig. 3, a step of pre-charging 308 one or more direct current link capacitors connected to the first converter output using a switchable pre-charge circuit element of the multi-stage electrical power supply when, i.e. during the time when, the first converter output voltage is below the threshold output voltage, precedes the step of selecting 307 the second power conversion unit.

The method ends, for example, when the multi-stage power supply is deactivated.

In an embodiment of the method 300 the step of determining 305 if the output voltage at the first converter output is below the threshold output voltage comprises determining that the second power conversion unit is a DC-DC converter unit having a second converter input connected to the first converter output of the first power conversion unit and that the multi-stage electrical power supply further comprises a switchable bypass circuit with a bypass switch, connected to bypass the second power conversion unit when the bypass switch is in an ON state, the step of selecting 306 the first power conversion unit to provide electrical power to an input of an electrolyser when the output voltage at the first converter output is not below the threshold output voltage comprises switching the bypass switch to the ON state, and the step of selecting 307 a second power conversion unit of the multi-stage electrical power supply instead of the first power conversion unit to provide electrical power to the input of the electrolyser when the output voltage at the first converter output is below the threshold output voltage comprises switching the bypass switch to an OFF state.

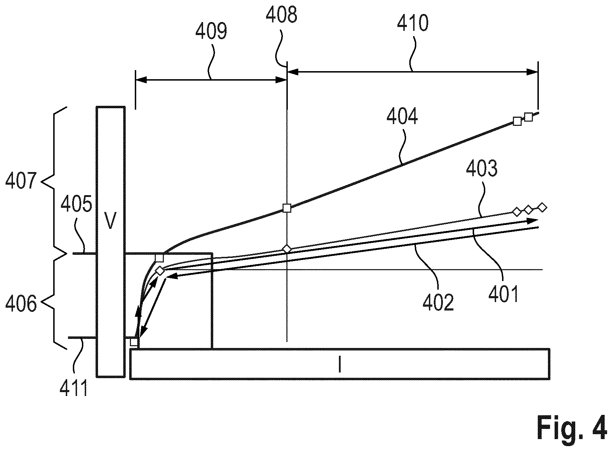

In Fig. 4 a graph of an example of an input voltage V over an input current I at an electrolyser input connected to a multi-stage electrical power supply is schematically illustrated for an electrolysis system with a multi-stage power supply as shown in Fig. 1. Curves are shown for electrolyser loading 401, electrolyser de-loading 402, electrolyser BOL (begin of lifetime) 403, and electrolyser EOL (end of lifetime) 404. Before the bypass switch is switched to ON state 405, the DC-DC converter unit and the AC-DC converter unit are enabled (second subset of input voltage range 406). When the bypass switch is switched to ON state, the DC-DC converter unit is bypassed and only the AC-DC converter unit provides power to the input of the electrolyser (first subset of the input voltage range 407). Further, a minimum continuous operation limit 408 may be defined to distinguish power provision during a ramping mode 409 and power provision during a continuous operation mode 410. Further, the polarization voltage limit 411 is indicated.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

In this document, the terms "input" and "output" refer to input and output interfaces, pins or any other input and output connection lines. However, the terms "input" and "output" address the complete input or output interface, i.e., both connection lines in a DC circuit and lines for all three shown phases of an AC connection with three phases. For the sake of clarity, in the figures usually only one of these set of connection lines is numbered by a reference numeral although it identifies the set of connection lines.

Unless stated otherwise, terms such as "first" and "second" are used arbitrarily to distinguish between the elements such terms describe. Thus, these terms are not necessarily intended to indicate temporal or other prioritization of such elements. For example, the term "second converter output" merely addresses an output of the second converter and does, e. g., not imply that the second converter also has a first output.

The mere fact that certain features are recited in mutually different claims does not indicate that a combination of these features cannot be used in advantage.

Although the invention has been illustrated and described in detail by the shown preferred embodiments, the invention is not limited by the disclosed examples and other variations can be derived therefrom by those skilled in the art without departing from the scope of the invention.

In summary, the invention relates to a multi-stage electrical power supply 120 for an electrolysis system 100, wherein an electrolyser 110 has an input voltage operating range, and the multi-stage electrical power supply 120 comprises a controller unit 124, at least a first and a second power conversion unit 127,128 connectable to an input 111 of the electrolyser 110, and DC-link capacitors 133, 134, wherein the first power conversion unit 127 has a first output voltage operating range that comprises a first subset of the input voltage operating range of the electrolyser 110 above and equal to a threshold output voltage of the first power conversion unit 127, the second power conversion unit 128 has a second output voltage operating range that comprises a second subset of said input voltage operating range below said threshold output voltage, the first and second output voltage operating ranges only together completely comprise the input voltage operating range of the electrolyser 110, the first power conversion unit 127 comprises a main AC-DC converter unit having a first converter output 132 connected to the DC-link capacitors 133, 134, and being configured to provide electrical power required by the electrolyser 110 for the first subset of the input voltage operating range via the first converter output 132 when an output voltage at the first converter output is above or equal to the threshold output voltage, and the second power conversion unit 128 has a second converter output 135 and provides electrical power for the second subset of the input voltage operating range when the voltage at the first converter output 132 is below the threshold output voltage, which is a minimum output voltage threshold of the first power conversion unit 127, and wherein the controller unit 124 selects the second power conversion unit 128 instead of the first to provide power to the electrolyser input 111 when the voltage at the first converter output 132 is below the threshold.

Further, an electrolysis system 100, a method 300 of operating a multi-stage electrical power supply for an electrolysis system, a computer program product, and a computer readable storage medium are provided.

## Claims

1. Multi-stage electrical power supply (120) for an electrolysis system (100), wherein an electrolyser (110) of the electrolysis system (100) has an input voltage operating range, the multi-stage electrical power supply (120) comprising
a controller unit (124);
at least a first and a second power conversion unit (127, 128) connectable to an input (111) of the electrolyser (110); and
one or more direct current link capacitors (133, 134), wherein
the first power conversion unit (127) has a first output voltage operating range that comprises a first subset of the input voltage operating range of the electrolyser (110) above and equal to a threshold output voltage of the first power conversion unit (127),
the second power conversion unit (128) has a second output voltage operating range that comprises a second subset of the input voltage operating range of the electrolyser (110) below said threshold output voltage of the first power conversion unit (127),
said first and second output voltage operating ranges only together completely comprise said input voltage operating range of the electrolyser (110),
the first power conversion unit (127) is or comprises a main alternating current-to-direct current converter unit having a first converter output (132) connected to the one or more direct current link capacitors (133, 134), and being configured to provide electrical power required by the electrolyser (110) for the first subset of the input voltage operating range via said first converter output (132) when an output voltage at the first converter output is above or equal to the threshold output voltage, and
the second power conversion unit (128) has a second converter output (135) and is configured to provide electrical power required by the electrolyser (110) for the second subset of the input voltage operating range via said second converter output when the output voltage at the first converter output (132) is below said threshold output voltage, wherein
said threshold output voltage is a minimum output voltage threshold of the first power conversion unit (127), and wherein
the controller unit (124) is configured to select the second power conversion unit (128) instead of the first power conversion unit (127) to provide electrical power to the input (111) of the electrolyser (110) when the output voltage at the first converter output (132) is below said threshold output voltage.

2. The multi-stage electrical power supply as claimed in claim 1, further comprising
a switchable pre-charge circuit element (136) configured to pre-charge the one or more direct current link capacitors (133, 134) when the first converter output voltage is below the threshold output voltage.

3. The multi-stage electrical power supply as claimed in claim 2, wherein the switchable pre-charge circuit element (136) comprises an additional alternating current-to-direct current converter unit (138).

4. The multi-stage electrical power supply as claimed in any of the preceding claims, wherein the second power conversion unit (128) is or comprises a direct current-to-direct current converter unit having a second converter input (141) connected to the first converter output (132) of the first power conversion unit (127) and wherein
the multi-stage electrical power supply (120) further comprises a switchable bypass circuit (139) with a bypass switch (140), connected to bypass the second power conversion unit (128) when the bypass switch (140) is in an ON state.

5. The multi-stage electrical power supply as claimed in claim 4, wherein the controller unit (124) is further configured to switch the bypass switch (140) in an OFF state and also disable the second power conversion unit (128) when the electrolyser (110) is not present or consumes no electrical power.

6. The multi-stage electrical power supply as claimed in claim 3, wherein the additional alternating current-to-direct current converter unit (138) is the second power conversion unit.

7. The multi-stage electrical power supply as claimed in claim 6, wherein the first converter output (132) and the second converter output are connected to the input (111) of the electrolyser (110) via an output switch (240).

8. The multi-stage electrical power supply as claimed in claim 7, wherein the controller unit (124) is further configured to switch the output switch (240) to an OFF state when the electrolyser (110) is not present or consumes no electrical power.

9. Electrolysis system (100), comprising at least one electrolyser (110) and a multi-stage electrical power supply (120) as claimed in any of claims 1 to 8.

10. Method (300) of operating a multi-stage electrical power supply for an electrolysis system as claimed in any of claims 1 to 8, comprising
connecting (302) an input of the multi-stage electrical power supply to an AC power grid;
determining (303) a minimum output voltage threshold of a first power conversion unit of the multi-stage electrical power supply as a threshold output voltage;
sensing (304) an output voltage at a first converter output of the first power conversion unit;
determining (305) if the output voltage at the first converter output is below the threshold output voltage;
selecting (306) the first power conversion unit to provide electrical power to an input of an electrolyser when the output voltage at the first converter output is not below the threshold output voltage; and
selecting (307) a second power conversion unit of the multi-stage electrical power supply instead of the first power conversion unit to provide electrical power to the input of the electrolyser when the output voltage at the first converter output is below the threshold output voltage.

11. The method as claimed in claim 10, further comprising
pre-charging (308) one or more direct current link capacitors connected to the first converter output using a switchable pre-charge circuit element of the multi-stage electrical power supply when the first converter output voltage is below the threshold output voltage.

12. The method as claimed in claim 10 or claim 11, wherein
the step of determining (305) if the output voltage at the first converter output is below the threshold output voltage, comprises determining that the second power conversion unit is a direct current-to-direct current converter unit having a second converter input connected to the first converter output of the first power conversion unit and that the multi-stage electrical power supply further comprises a switchable bypass circuit with a bypass switch, connected to bypass the second power conversion unit when the bypass switch is in an ON state;
the step of selecting (306) the first power conversion unit to provide electrical power to an input of an electrolyser when the output voltage at the first converter output is not below the threshold output voltage comprises switching the bypass switch to the ON state; and
the step of selecting (307) a second power conversion unit of the multi-stage electrical power supply instead of the first power conversion unit to provide electrical power to the input of the electrolyser when the output voltage at the first converter output is below the threshold output voltage comprises switching the bypass switch to an OFF state.

13. A computer program product, comprising code portions that, when executed on a programmable apparatus, enable the programmable apparatus to carry out steps of a method (300) according to any of the claims 10 to 12.

14. A computer readable storage medium, comprising a computer program product according to claim 13.
